# DEMANDE DE BREVET EUROPEEN

(11) **EP 2 532 759 A1**
(43) Date de publication de la demande: **12.12.2012**
(21) Numéro de dépôt: 12170998.4
(22) Date de dépôt: 06.06.2012
(51) Int. Cl.: C22B 3/00, C22B 7/00, C22B 26/12

(54) **Procédé de séparation de métaux à partir de batteries contenant du lithium**

(30) Priorité: 07.06.2011 FR 1154963
(71) Demandeur: SARP INDUSTRIES, 78520 Limay (FR)
(72) Inventeur: Borrini, Julien, 69360 TERNAY (FR); Meyer, Daniel, 30150 ST GENIES DE COMOLAS (FR); Fontecave, Marc, 38330 SAINT ISMIER (FR); Peneliau, Franck, 57420 COIN-SUR-SEILLE (FR)
(74) Mandataire: Cabinet Plasseraud

(57) **Abrégé**

L'invention concerne un procédé de récupération de métaux à partir d'un broyat de batteries ou éléments de batteries au lithium comprenant les étapes suivantes :
a) lixiviation du broyat en milieu acide de façon à dissoudre une partie du broyat pour obtenir une solution contenant des ions métalliques et un partie de broyat insoluble,
b) séparation des ions métalliques en solution comprenant
i) la séparation des ions métalliques contenus dans la solution obtenue à l'issu de l'étape a) sur une première résine échangeuse de cations, de préférence sur une résine sulfonique échangeuse de cations, de façon à obtenir une solution d'ions lithium (i-1), une solution d'ions nickel, cobalt et/ou manganèse (i-2) et une solution d'ions aluminium (i-3),
ii) la séparation d'un mélange d'ions nickel et cobalt et des ions manganèse de la solution (i-2) sur une seconde résine échangeuse de cations, de préférence sur une résine sulfonique échangeuse de cations, de façon à obtenir une solution d'ions nickel et cobalt (ii-1) et une solution d'ions manganèse (ii-2).

## Description

L'invention a pour objet un procédé de séparation de métaux à partir de batteries contenant du lithium sous forme ionique ou métallique, au moins un métal divalent tel que le manganèse, le nickel, ou le cobalt, et un métal trivalent tel que l'aluminium, en particulier à partir des batteries de type lithium-ion.

Parmi les batteries contenant du lithium, on distingue les batteries contenant le lithium sous forme métallique et les batteries contenant le lithium sous forme ionique.

Les batteries de type lithium-ion connaissent un grand succès dans tous types d'appareils nomades tels que les téléphones et ordinateurs portables et les appareils photos. Elles trouvent également une application en tant que batteries de véhicules électriques.

Le procédé selon l'invention trouve une application particulière dans la séparation de métaux à partir de batteries de véhicules électriques, mais peut bien entendu être appliqué à d'autres batteries contenant du lithium.

On connait du document FR2796207 un procédé de récupération du lithium à partir de produits de fragmentation de batteries au lithium. Ce procédé consiste à dissoudre les espèces métalliques avec une solution d'acide chlorhydrique et à précipiter ensuite les métaux lourds et le manganèse sous forme d'hydroxydes. On obtient ainsi d'une part un mélange d'hydroxydes insolubles et d'autre part une solution contenant la majeure partie du lithium des batteries. Toutefois, ce document reste muet en ce qui concerne la récupération des autres métaux qui ont été précipités sous forme d'hydroxydes.

Ce document décrit également un certain nombre d'autres procédés de retraitement connus dans l'art. A cause de la complexité de la séparation de plusieurs espèces métalliques, ces procédés se contentent généralement de ne récupérer que certaines des espèces métalliques.

Il existe donc toujours un besoin d'un procédé de séparation des métaux contenus dans les batteries au lithium, notamment de batteries de type lithium ion.

La Société Demanderesse a maintenant eu le mérite de mettre au point, après de longues et intenses recherches, un procédé permettant de séparer de manière efficace des métaux à partir de batteries contenant du lithium sous forme ionique ou métallique, du manganèse, du nickel, et/ou du cobalt, et de l'aluminium.

Un objet de la présente invention est donc un procédé de récupération de métaux à partir d'un broyat de batteries ou éléments de batteries au lithium comprenant les étapes suivantes :
a) lixiviation du broyat en milieu acide de façon à dissoudre une partie du broyat pour obtenir une solution contenant des ions métalliques et un partie de broyat insoluble,
b) séparation des ions métalliques en solution comprenant
   i) la séparation des ions métalliques contenus dans la solution obtenue à l'issu de l'étape a) sur une première résine échangeuse de cations, de préférence sur une résine sulfonique échangeuse de cations, de façon à obtenir une solution d'ions lithium (i-1), une solution d'ions nickel et/ou cobalt et manganèse (i-2) et une solution d'ions aluminium (i-3),
   ii) la séparation d'un mélange d'ions nickel et/ou cobalt et des ions manganèse de la solution (i-2) sur une seconde résine échangeuse de cations, de préférence sur une résine sulfonique échangeuse de cations, de façon à obtenir une solution d'ions nickel et/ou cobalt (ii-1) et une solution d'ions manganèse (ii-2).

Le broyat de batteries ou éléments de batteries lithium-ion peut être obtenu de façon connue de l'homme de l'art par la mise en sécurité et le démantèlement des batteries ou éléments de batteries, suivis du broyage des batteries ou éléments de batteries précédemment mises en sécurité et démantelées et lavage à l'eau des broyats ainsi obtenus.

Le procédé selon l'invention permet de récupérer au moins une partie des métaux contenus dans les cellules des batteries lithium-ion, notamment du lithium, manganèse, cobalt, nickel et aluminium.

Avantageusement, l'acide utilisé à l'étape de lixiviation est choisi parmi les acides minéraux, préférentiellement dans le groupe constitué par l'acide sulfurique, l'acide chlorhydrique, l'acide phosphorique, l'acide nitrique et les mélanges d'un ou plusieurs de ceux-ci. L'acide sulfurique est préféré puisqu'il est le moins corrosif pour les matériaux utilisés dans le procédé, qu'il présente moins de dangers lors de son utilisation, et qu'il est disponible facilement, à un coût relativement faible.

La lixiviation du broyat à l'aide d'un acide permet de dissoudre une partie des métaux contenus dans le broyat, notamment le lithium, le manganèse, le cobalt, le nickel et l'aluminium. On obtient ainsi une solution contenant ces ions métalliques.

Cette solution est ensuite soumise à la séparation des ions métalliques, notamment des ions lithium, manganèse, cobalt, nickel et aluminium, sur la première résine échangeuse d'ions. Cette séparation comprend une élution de la solution obtenue à l'issu de l'étape de lixiviation avec un acide de concentration croissante ou une solution aqueuse d'un sel alcalin de concentration croissante.

L'acide est avantageusement choisi parmi les acides minéraux, notamment parmi l'acide chlorhydrique, l'acide phosphorique, l'acide nitrique, l'acide sulfurique ou leurs mélanges. L'acide préféré est l'acide sulfurique puisqu'il est le moins corrosif pour les matériaux utilisés dans le procédé, qu'il présente moins de dangers lors de son utilisation et qu'il est disponible facilement, à un coût relativement faible.

Le sel alcalin est avantageusement choisi parmi les sels minéraux, notamment parmi les chlorures et les sulfates, tels que le chlorure de sodium et le sulfate de sodium.

Avantageusement, on réalise l'élution avec un acide minéral, de préférence de l'acide sulfurique avec une concentration croissante de 0,5N à 5N, de préférence de 0,8N à 4N. De cette façon, on élue successivement une solution d'ions lithium, une solution d'ions nickel et/ou cobalt et manganèse et une solution d'ions aluminium.

Lorsque l'on utilise une solution aqueuse d'un sel alcalin, on emploie une concentration croissante cations alcalins de 0,5N à 5N, de préférence de 0,8N à 4N.

De façon avantageuse, l'élution des ions métalliques est précédée d'un lavage de la résine chargée avec la solution obtenue à l'issue de l'étape de lixiviation. Ce lavage est de préférence effectué avec de l'eau ou avec le même acide minéral que l'élution à une concentration inférieure à celles utilisées pour l'élution. Préférentiellement, on utilise une concentration de 0,1N à 0,45N, de préférence d'environ 0,4N. Cette étape de lavage permet de récupérer plus de 98% de la matière organique contenue dans la solution. Cette matière organique correspond en effet aux résidus de solvants organiques des batteries dissous lors de l'étape de lixiviation.

Dans un mode de réalisation avantageux, la solution obtenue à l'issue de l'étape de lixiviation est chargée sur la résine à un taux de chargement de 15 à 40 % de la capacité théorique de la résine. En principe, moins la résine est chargée meilleure est la séparation. Toutefois, en dessous de 15 %, le procédé n'est pas économiquement rentable. Il faut aussi noter que plus la résine est chargée, plus grande est la concentration des solutions de métaux récupérées. Au-delà de 40 %, la séparation ne donne plus satisfaction.

La solution d'ions nickel et/ou cobalt et manganèse (i-2) obtenue à l'issue de l'étape de séparation est soumise à l'étape de séparation ii) sur une seconde résine échangeuse de cations, de préférence une résine sulfonique échangeuse de cations de façon à récupérer une solution d'ions cobalt et/ou nickel et une solution d'ions manganèse.

La séparation d'un mélange d'ions nickel et/ou cobalt et des ions manganèse sur la seconde résine échangeuse de cations comprend une élution des ions nickel et cobalt de la solution (i-2) avec une solution complexant les ions nickel et/ou cobalt. On obtient ainsi la solution (ii-1). De préférence l'élution est réalisée avec une solution d'un acide aminopolycarboxylique. Les acides aminopolycarboxyliques, notamment les acides aminopolyacétiques, forment des complexes forts et solubles avec les ions cobalt et nickel. Des exemples non limitatifs d'acides aminopolycarboxyliques comprennent l'acide diéthylènetriaminopentaacétique (DTPA), l'acide éthylènediaminetétraacétique (EDTA), l'acide nitrilotriacétique (NTA), l'acide N-(2-hydroxyéthyl)éthylènediaminetriacétique (HEDTA), l'acide iminodiacétique (IDA). On utilisera de préférence l'acide diéthylènetriaminopentaacétique (DTPA) ou l'acide éthylènediaminetétraacétique (EDTA). De très bons résultats ont été obtenus avec de l'acide diéthylènetriaminopentaacétique (DTPA).

Dans un mode de réalisation, on utilise une solution aqueuse d'acide aminopolycarboxylique ayant un pH de 3 à 6, de préférence d'environ 5.

L'élution du mélange d'ions nickel et/ou cobalt est suivie d'une élution des ions manganèse, par exemple avec un acide minéral ou une solution aqueuse d'un sel alcalin, de préférence avec un acide minéral. On obtient ainsi la solution (ii-2).

L'acide minéral est avantageusement choisi dans le groupe constitué par l'acide chlorhydrique, l'acide phosphorique, l'acide nitrique, l'acide sulfurique ou leurs mélanges. L'acide préféré est l'acide sulfurique pour les raisons citées précédemment.

De bons résultats sont obtenus lorsque l'acide utilisé pour l'élution a une concentration de 2N à 4N, préférentiellement d'environ 4N.

Le sel alcalin est avantageusement choisi parmi les sels minéraux, notamment parmi les chlorures et les sulfates, tels que le chlorure de sodium et le sulfate de sodium.

Lorsque l'on utilise une solution aqueuse d'un sel alcalin, on emploie une concentration de 2N à 4N, préférentiellement d'environ 4N.

Les métaux contenus dans les solutions obtenues à l'issue du procédé selon l'invention peuvent être valorisés après récupération par des méthodes connues de l'homme du métier ou directement sous forme de la solution obtenue.

L'invention sera maintenant illustrée par les exemples non limitatifs suivants.

Les figures annexées sont données pour illustrer les résultats des exemples.
- La figure 1 montre les profils d'élution avec de l'acide sulfurique à la première étape de séparation sur résine échangeuse de cations à un taux de chargement de 24%,
- La figure 2 montre les profils d'élution avec de l'acide sulfurique à la première étape de séparation sur résine échangeuse de cations à un taux de chargement de 35%,
- La figure 3 montre les profils d'élution avec de l'acide sulfurique à la première étape de séparation sur résine échangeuse de cations à un taux de chargement de 47%,
- La figure 4 montre les profils d'élution avec du DTPA à la deuxième étape de séparation sur résine échangeuse de cations,
- La figure 5 montre les profils d'élution avec du EDTA à la deuxième étape de séparation sur résine échangeuse de cations,
- La figure 6 montre les profils d'élution avec de l'acide chlorhydrique à la première étape de séparation sur résine échangeuse de cations à un taux de chargement de 24%,
- La figure 7 montre les profils d'élution avec du chlorure de sodium à la première étape de séparation sur résine échangeuse de cations à un taux de chargement de 24%,
- La figure 8 montre les profils d'élution avec du chlorure de sodium à la première étape de séparation sur résine échangeuse de cations à un taux de chargement de 35%.

### EXEMPLES

### EXEMPLE 1 : Préparation d'un broyat de batteries

Dix cellules de batteries, issues du démantèlement manuel de batteries de véhicules électriques hors d'usage (desquelles on a retiré la coque métallique, les connecteurs en cuivre, des éléments en plastiques), sont passées successivement dans deux broyeurs à couteaux de 12 et 6mm équipés de dispositifs d'aspersion d'eau, de manière à éviter l'inflammation ou l'échauffement et à laver les broyats obtenus. On obtient ainsi environ 9 kg de broyats de dimensions inférieure à 6mm.

### EXEMPLE 2 : Lixiviation du broyat

On prépare une solution d'acide sulfurique en diluant 460 g d'acide sulfurique à 96% dans 3,25 L d'eau. 750 g de broyat obtenu à l'exemple 1 sont alors introduits dans la solution d'acide ainsi obtenue. Le mélange est agité pendant 4 heures, puis filtré. Le lixiviat obtenu contient des ions lithium, nickel, cobalt, manganèse et aluminium dans les teneurs indiquées dans le tableau 1 ci-après.

**Tableau 1**

| | Al | Co | Ni | Mn | Li |
|---|---|---|---|---|---|
| mol/L | 2,82.10⁻¹ | 1,38.10⁻² | 6,41.10⁻² | 3,30.10⁻¹ | 2,68.10⁻¹ |
| g/L | 7,61 | 0,82 | 3,76 | 18,14 | 1,86 |

### EXEMPLE 3 : Première étape de séparation avec de l'acide sulfurique

### EXEMPLE 3-A :

5 mL de lixiviat obtenu selon l'exemple 2 ont été soumis à une séparation à l'aide d'une résine sulfonique échangeuse de cations, modèle DOWEX 50X8, mesh 100-200 (The DOW Chemical Company).

La capacité d'échange théorique donnée par le constructeur est de 1,7 eq/L résine. La solution représente 1,93 eq/L en se basant sur les cations autres que les protons.

### Préparation de la colonne

20g de résine ont été suspendus dans 15 mL d'eau. La suspension est introduite dans une colonne en verre de 15mm de diamètre. Après compactage, le volume du lit représente 25 mL (la hauteur du lit est de 141mm). La capacité théorique maximale est alors estimée à 42,5 meq.

Un lavage acide avec 20 mL de [H₂SO₄] = 0,4M a été réalisé ensuite.

### Captation de la charge

5 mL de la solution de lixiviat à purifier sont chargés sur la colonne. Le nombre d'équivalents de cations métalliques est d'environ 10 meq. La charge en cations métalliques représente alors 24% de la capacité théorique de la résine. Le débit peut varier entre 1,5 à 3,5 BV/h.

### Elution

Une fois la charge captée, 1 BV (BV = bed volume en anglais), volume correspondant au volume du lit de résine (25 mL dans le présent exemple), de l'acide sulfurique à 0,2 mol/L a été employé pour effectuer un lavage avant l'élution des cations métalliques. Dans ce volume plus de 98% de la matière organique correspondant aux solvants dissous ont été récupérés.

Le lavage et l'élution sont effectués à un débit de 1,5 BV/h.

2 BV d'acide sulfurique à 0,4 mol/L ont ensuite été utilisés pour éluer les ions lithium, suivi de 3,5 BV d'acide sulfurique à 1 mol/L pour éluer les ions nickel, cobalt et manganèse et finalement 1,5 BV d'acide sulfurique à 2 mol/L pour éluer les ions aluminium et 0,5 BV d'acide sulfurique à 0,4 mol/L pour éliminer le volume mort d'acide et permettre à la résine de reprendre son volume initial car l'ajout d'acide concentré induit une compression du volume de résine.

Les trois solutions (fractions) suivante ont donc été obtenues successivement:
- solution d'ions lithium
- solution d'ions cobalt, nickel et manganèse
- solution d'ions aluminium.

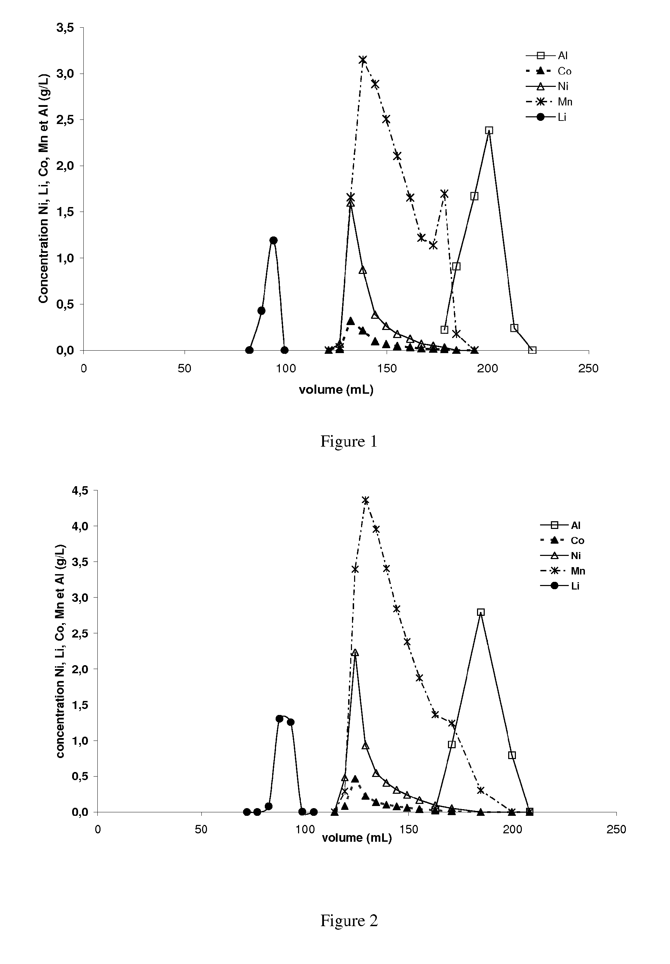

La composition des fractions est décrite dans le tableau 2 ci-après. Les profils d'élution sont indiqués à la figure 1.

Ces profils sont obtenus en prélevant, tous les 5 mL environ, un échantillon de solution sortant de la colonne, et en analysant ces échantillons par ICP/OES (Inductively Coupled Plasma / Optical Emission Spectrometry) sur un spectromètre SPECTRO ARCOS EOP (End-On Plasma) (SPECTRO Analytical Instruments GmbH, Kleve, Allemagne).

**Tableau 2**

| Eléments | Pourcentage récupéré | Volume | % masse Al / éléments | Teneur Al |
|---|---|---|---|---|
| | | | | |
| Li | 100% | 0,5 BV | X | < 0,1 ppm |
| | | | | |
| Ni / Co | 90 à 95% | 1 BV | 0,01% | < 1 ppm |
| | 95 à 100% | 1,6 BV | 0,07% | < 5 ppm |

### EXEMPLE 3-B :

L'exemple 3-A a été répété en chargeant la colonne avec 7,5 mL du lixiviat de l'exemple 2 et donc une charge représentant 35 %de la capacité théorique de la résine.

Avec une telle charge, la séparation du groupe d'ions cobalt, nickel et manganèse des ions aluminium est légèrement moins bonne que dans l'exemple 3-A, mais elle reste satisfaisante, comme le montrent les profils d'élution représentés à la figure 2. Les solutions de lithium, nickel-cobalt-manganèse, et aluminium sont obtenues avec des concentrations plus grandes que dans l'exemple 3-A. La composition des fractions est décrite dans le tableau 3 ci-après.

**Tableau 3**

| Eléments | Pourcentage récupéré | Volume | % masse Al / éléments | Teneur Al |
|---|---|---|---|---|
| | | | | |
| Li | 100% | 0,42 BV | X | < 0,1 ppm |
| | | | | |
| Ni / Co | 90% | 1,4 BV | 0,01% | < 1 ppm |
| | 95% | 1,6 BV | 0,02% | < 1 ppm |

### EXEMPLE 3-C :

L'exemple 3-A a été répété en chargeant la colonne avec 10 mL du lixiviat de l'exemple 2 et donc une charge représentant 47 % de la capacité théorique de la résine.

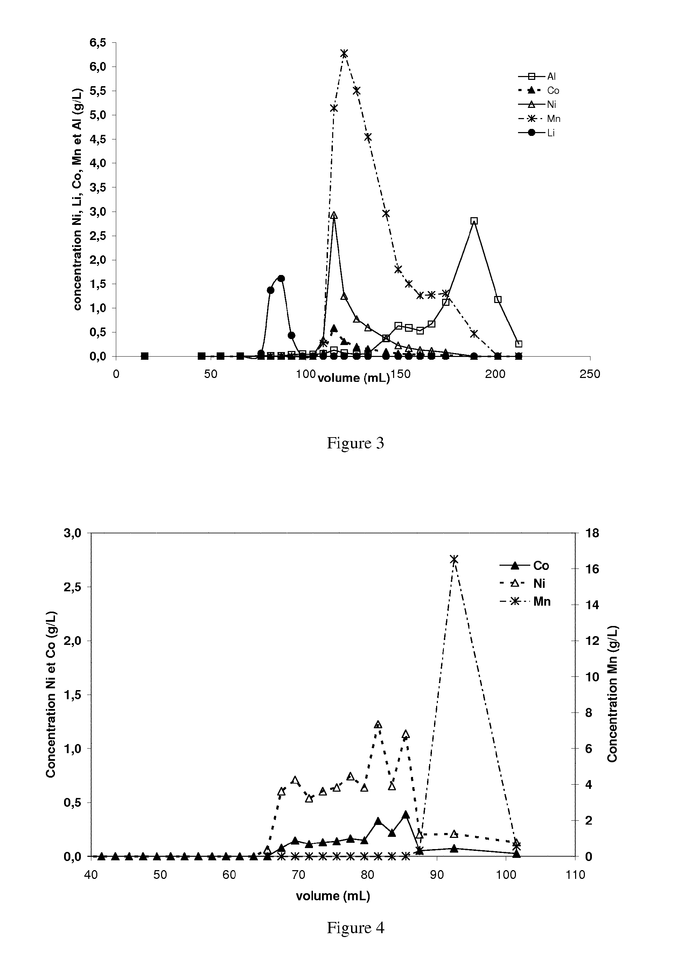

Avec une telle charge, la séparation du groupe d'ions cobalt, nickel et manganèse des ions aluminium est moins satisfaisante, comme le montrent les profils d'élution représentés à la figure 3. La composition des fractions est décrite dans le tableau 4 ci-après.

**Tableau 4**

| Eléments | Pourcentage récupéré | Volume | % masse Al / éléments | Teneur Al |
|---|---|---|---|---|
| | | | | |
| Li | 90% | 0,5 BV | 1% | 2,3 ppm |
| | 100% | 0,65 BV | 2% | 3,6 ppm |
| Ni / Co | 90% | 1,6 BV | 17% | 34 ppm |
| | 95% | 1,8 BV | 25% | 43 ppm |

### EXEMPLE 4-A : Deuxième étape de séparation - DTPA (acide diéthylènetriaminopentaacétique)

30 mL d'une solution d'ions cobalt, nickel et manganèse obtenue selon l'exemple 3-B ont été soumis à une séparation sur une résine sulfonique échangeuse de cations, modèle DOWEX 50X8, mesh 100-200 (The DOW Chemical Company).

Les teneurs en ions cobalt, nickel et manganèse de la solution étaient les suivantes :
[Co] = 0,14 g/L ; [Ni] = 0,58 g/L ; [Mn] = 2,73 g/L.
30 mL de cette solution ont été chargés sur une colonne en verre de 10 mm de diamètre de 10 mL (= 8,2g de résine suspendus dans 6 mL d'eau et compacté) de résine DOWEX 50X8, au débit de 3,5 BV/h. La hauteur du lit de résine dans la colonne est 128mm. Un lavage avec 8 mL de [H₂SO₄] = 0,4 M a été effectué préalablement au chargement de la colonne.

Après captation, la résine est lavée avec 1 BV de [NaCl] = 0,2 M avant l'élution avec l'acide aminopolyacétique.

Le nickel et le cobalt ont été élués en faisant passer sur la colonne, au débit de 3,5 BV/h, 5 BV de solution aqueuse à 0,1 mol/L de DTPA amenée à pH 4 par ajout d'hydroxyde de sodium.

Une solution contenant 0,75 g/L de nickel, 0,19 g/L de cobalt a alors été obtenue. Le volume de cette solution est de 20 mL soit 2 BV. Cette solution contenait moins de 0,01 g/L de manganèse.

Ensuite, le manganèse a été élué en faisant passer sur la colonne 1 BV d'acide sulfurique à 2 mol/L.

Les profils d'élution sont donnés à la figure 4.

Ces profils sont obtenus en prélevant, tous les 2 mL environ, un échantillon de solution sortant de la colonne, et en analysant ces échantillons par ICP/OES (Inductively Coupled Plasma / Optical Emission Spectrometry) sur un spectromètre SPECTRO ARCOS EOP (End-On Plasma) (SPECTRO Analytical Instruments GmbH, Kleve, Allemagne).

### EXEMPLE 4-B : Deuxième étape de séparation - EDTA

30 mL d'une solution d'ions cobalt, nickel et manganèse obtenue selon l'exemple 3-B ont été soumis à une séparation sur une résine sulfonique échangeuse de cations, modèle DOWEX 50X8, mesh 100-200 (The DOW Chemical Company)

Les teneurs en ions cobalt, nickel et manganèse de la solution étaient les suivantes :
[Co] = 0,14 g/L ; [Ni] = 0,58 g/L ; [Mn] = 2,73 g/L.
30 mL de cette solution ont été chargés sur une colonne en verre de 10 mm de diamètre de 10 mL (= 8,5g de résine suspendus dans 10 mL d'eau et compacté) de résine DOWEX 50X8, au débit de 3,5 BV/h. La hauteur du lit de résine dans la colonne est 128mm. Un lavage avec 8 mL de [H₂SO₄] = 0,4 M a été effectué préalablement au chargement de la colonne.

Après la captation, la résine a été lavée avec 10 mL (= 1 BV) d'une solution aqueuse de NaCl à 0.2 mol/L au débit de 3,5 BV/h afin d'éliminer l'excès de protons et d'équilibrer la résine.

Le nickel, et le cobalt ont été élués en faisant passer sur la colonne, au débit de 3,5 BV/h, 5 BV de solution aqueuse à 0,1 mol/L de EDTA à pH 5 puis 1 BV de solution aqueuse à 0,2 mol/L de EDTA à pH 5.

Une solution contenant 1,07 g/L de nickel, 0,21 g/L de cobalt a alors été obtenue. Le volume de cette solution est de 12 mL soit 1,2 BV.

Ensuite, le manganèse a été élué en faisant passer sur la colonne 1 BV d'acide sulfurique à 2 mol/L.

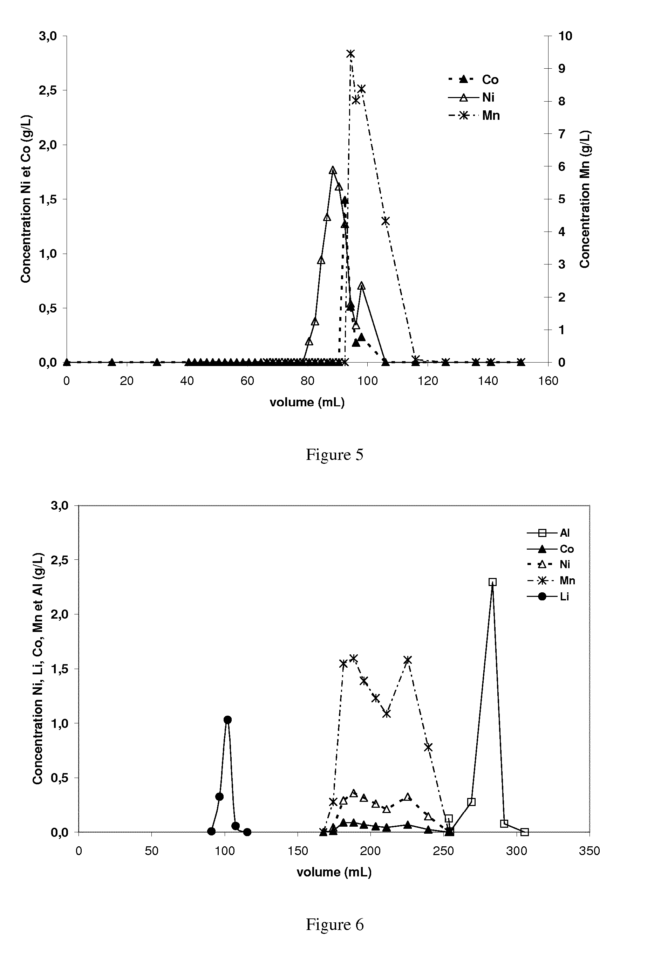

Les profils d'élution sont donnés à la figure 5.

Ces profils sont obtenus en prélevant, tous les 2 mL environ, un échantillon de solution sortant de la colonne, et en analysant ces échantillons par ICP/OES (Inductively Coupled Plasma / Optical Emission Spectrometry) sur un spectromètre SPECTRO ARCOS EOP (End-On Plasma) (SPECTRO Analytical Instruments GmbH, Kleve, Allemagne).

### EXEMPLE 5 : Première étape de séparation avec de l'acide chlorhydrique

5 mL de lixiviat obtenu selon l'exemple 2 ont été soumis à une séparation à l'aide d'une résine sulfonique échangeuse de cations, modèle DOWEX 50X8, mesh 100-200 (The DOW Chemical Company).

La capacité d'échange théorique donnée par le constructeur est de 1,7 eq/L résine. La solution représente 1,93 eq/L en se basant sur les cations autres que les protons.

### Préparation de la colonne

20g de résine ont été suspendus dans 15 mL d'eau. La suspension est introduite dans une colonne en verre de 15mm de diamètre. Après compactage, le volume du lit représente 25 mL (la hauteur du lit est de 141mm). La capacité théorique maximale est alors estimée à 42,5 meq.

Un lavage acide avec 20 mL de [H₂SO₄] = 0,4M a été réalisé ensuite.

### Captation de la charge

5 mL de la solution de lixiviat à purifier sont chargés sur la colonne. Le nombre d'équivalent de cations métalliques est d'environ 10 meq. La charge en cations métalliques représente alors 24% de la capacité théorique de la résine. Le débit est de 1,5 BV/h.

### Elution

Une fois la charge captée, 1 BV d'acide chlorhydrique à 0,2 mol/L a été employé pour effectuer un lavage avant l'élution des cations métalliques. Dans ce volume plus de 98% de la matière organique correspondant aux solvants dissous ont été récupérés.

Le lavage et l'élution sont effectués à un débit de 1,5 BV/h.

2 BV d'acide chlorhydrique à 0,4 mol/L ont ensuite été utilisés pour éluer les ions lithium, suivi de 5 BV d'acide chlorhydrique à 1 mol/L et 1,5 BV d'acide chlorhydrique à 2 mol/L pour éluer les ions nickel, cobalt et manganèse et finalement 1.5 BV d'acide chlorhydrique à 4 mol/L pour éluer les ions aluminium. Afin que la résine reprenne son volume initial, on emploie 0,5 BV d'acide chlorhydrique à 0,4 mol/. Ceci permet également d'éliminer le volume mort d'acide

Les trois solutions (fractions) suivante ont donc été obtenues successivement:
- solution d'ions lithium
- solution d'ions cobalt, nickel et manganèse
- solution d'ions aluminium.

La composition des fractions est décrite dans le tableau 5 ci-après. Les profils d'élution sont indiqués à la figure 6.

Ces profils sont obtenus en prélevant, tous les 5 mL environ, un échantillon de solution sortant de la colonne, et en analysant ces échantillons par ICP/OES (Inductively Coupled Plasma / Optical Emission Spectrometry) sur un spectromètre SPECTRO ARCOS EOP (End-On Plasma) (SPECTRO Analytical Instruments GmbH, Kleve, Allemagne).

**Tableau 5**

| Eléments | Pourcentage récupéré | Volume | C (g/L) | Teneur Al |
|---|---|---|---|---|
| | | | | |
| **Li** | **100%** | **0,5 BV** | **0,7** | < 0,1 ppm |
| **Ni / Co** | **90%** | **2,3 BV** | **0,26 / 0,06** | < 0,1 ppm |

### EXEMPLE 6-A : Première étape de séparation avec une solution de chlorure de sodium

5 mL de lixiviat obtenu selon l'exemple 2 ont été soumis à une séparation à l'aide d'une résine sulfonique échangeuse de cations, modèle DOWEX 50X8, mesh 100-200 (The DOW Chemical Company).

La capacité d'échange théorique donnée par le constructeur est de 1,7 eq/L résine. La solution représente 1,93 eq/L en se basant sur les cations autres que les protons.

### Préparation de la colonne

20g de résine ont été suspendus dans 15 mL d'eau. La suspension est introduite dans une colonne en verre de 15mm de diamètre. Après compactage, le volume du lit représente 25 mL (la hauteur du lit est de 141mm). La capacité théorique maximale est alors estimée à 42,5 meq.

Un lavage avec 20 mL d'une solution aqueuse de H₂SO₄ à 0,4M a été réalisé ensuite.

### Captation de la charge

5 mL de la solution de lixiviat à purifier sont chargés sur la colonne. Le nombre d'équivalent de cations métalliques est d'environ 10 meq. La charge en cations métalliques représente alors 24% de la capacité théorique de la résine. Le débit est de 1,5 BV/h.

### Elution

Une fois la charge captée, 1 BV (BV = bed volume en anglais), volume correspondant au volume du lit de résine (25 mL dans le présent exemple), une solution aqueuse de chlorure de sodium à 0,2 mol/L a été employé pour effectuer un lavage avant l'élution des cations métalliques. Dans ce volume plus de 98% de la matière organique correspondant aux solvants dissous ont été récupérés.

Le lavage et l'élution sont effectués à un débit de 1,5 BV/h.

1,8 BV d'une solution aqueuse de chlorure de sodium à 0,4 mol/L à pH = 2 ont ensuite été utilisés pour éluer les ions lithium, suivis de 4 BV une solution aqueuse de chlorure de sodium à 1 mol/L à pH = 2 pour éluer les ions nickel, cobalt et manganèse et finalement 1,5 BV une solution aqueuse de chlorure de sodium à 2 mol/L à pH = 2 pour éluer les ions aluminium.

Les trois solutions (fractions) suivante ont donc été obtenues successivement :
- solution d'ions lithium
- solution d'ions cobalt, nickel et manganèse
- solution d'ions aluminium.

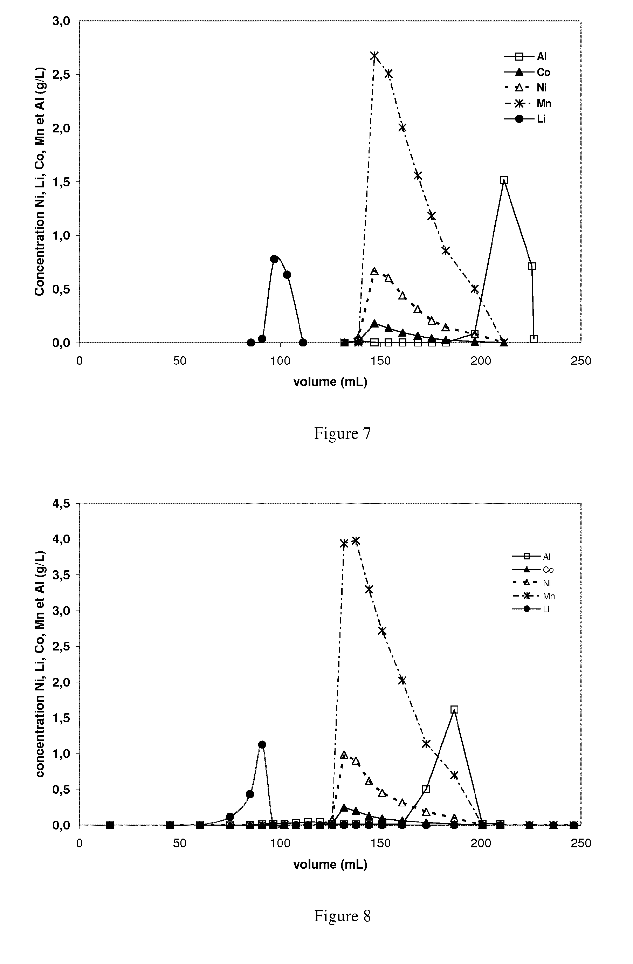

La composition des fractions est décrite dans le tableau 6 ci-après. Les profils d'élution sont indiqués à la figure 7.

Ces profils sont obtenus en prélevant, tous les 5 mL environ, un échantillon de solution sortant de la colonne, et en analysant ces échantillons par ICP/OES (Inductively Coupled Plasma / Optical Emission Spectrometry) sur un spectromètre SPECTRO ARCOS EOP (End-On Plasma) (SPECTRO Analytical Instruments GmbH, Kleve, Allemagne).

**Tableau 6**

| Eléments | Pourcentage récupéré | Volume | c (g/L) | Teneur Al |
|---|---|---|---|---|
| | | | | |
| Li | 100 % | 0,52 BV | 0,7 | <0,1 ppm |
| Ni/Co | 90 % | 1,5 BV | 0,4/0,1 | 4ppm |

### EXEMPLE 6-B :

L'exemple 6-A a été répété en chargeant la colonne avec 7,5 mL d'un lixiviat obtenu selon l'exemple 2 et donc une charge représentant 35 %de la capacité théorique de la résine.

Avec une telle charge, la séparation du groupe d'ions cobalt, nickel et manganèse des ions aluminium est légèrement moins bonne que dans l'exemple 6-A, mais elle reste satisfaisante, comme le montrent les profils d'élution représentés à la figure 8. Les solutions de nickel-cobalt-manganèse, sont obtenues avec des concentrations plus grandes que dans l'exemple 6-A (cf. tableau 7 ci-après).

**Tableau 7**

| Eléments | Pourcentage récupéré | Volume | c (g/L) | Teneur Al |
|---|---|---|---|---|
| | | | | |
| Li | 100 % | 0,8 BV | 0,64 | 14 ppm |
| Ni/Co | 85 % | 1,4 BV | 0,65/0,15 | 13 ppm |

## Revendications

1. Procédé de récupération de métaux à partir d'un broyat de batteries ou éléments de batteries au lithium comprenant les étapes suivantes :
a) lixiviation du broyat en milieu acide de façon à dissoudre une partie du broyat pour obtenir une solution contenant des ions métalliques et un partie de broyat insoluble,
b) séparation des ions métalliques en solution comprenant
i) la séparation des ions métalliques contenus dans la solution obtenue à l'issu de l'étape a) sur une première résine échangeuse de cations, de préférence sur une résine sulfonique échangeuse de cations, de façon à obtenir une solution d'ions lithium (i-1), une solution d'ions nickel, cobalt et/ou manganèse (i-2) et une solution d'ions aluminium (i-3),
ii) la séparation d'un mélange d'ions nickel et cobalt et des ions manganèse de la solution (i-2) sur une seconde résine échangeuse de cations, de préférence sur une résine sulfonique échangeuse de cations, de façon à obtenir une solution d'ions nickel et cobalt (ii-1) et une solution d'ions manganèse (ii-2).

2. Procédé selon la revendication 1, dans lequel la séparation des ions métalliques à l'étape i) comprend une élution de la solution obtenue à l'issue de l'étape a) avec un acide de concentration croissante ou une solution aqueuse d'un sel alcalin de concentration croissante.

3. Procédé selon la revendication 1 ou 2, dans lequel l'acide est choisi parmi les acides minéraux, notamment parmi l'acide chlorhydrique, l'acide phosphorique, l'acide nitrique, l'acide sulfurique ou leurs mélanges.

4. Procédé selon l'une quelconque des revendications 1 à 3, dans lequel la solution obtenue à l'issue de l'étape a) est chargée sur la première résine à un taux de chargement de 15 à 40 % de la capacité théorique de la résine.

5. Procédé selon l'une quelconque des revendications 1 à 4, dans lequel la séparation des ions manganèse et d'un mélange d'ions nickel et d'ions cobalt à l'étape ii) comprend une élution des ions nickel et/ou cobalt de la solution i-2 avec une solution complexant les ions nickel et cobalt.

6. Procédé selon la revendication 5, dans lequel la solution complexant les ions nickel et cobalt est une solution d'un acide aminopolycarboxylique, de préférence d'un acide aminopolyacétique.

7. Procédé selon la revendication 6, dans lequel l'acide aminopolycarboxylique est l'acide diéthylènetriaminopentaacétique (DTPA).

8. Procédé selon l'une quelconque des revendications 5 à 7 dans lequel l'élution des ions nickel et/ou cobalt est suivie d'une élution des ions manganèse, de préférence avec un acide minéral.

9. Procédé selon la revendication 8, dans lequel l'acide minéral est choisi parmi l'acide chlorhydrique, l'acide phosphorique, l'acide sulfurique ou leurs mélanges.

10. Procédé selon la revendication 9, dans lequel l'acide minéral est l'acide sulfurique.
